# EUROPÄISCHE PATENTANMELDUNG

(11) **EP 1 495 926 A1**
(43) Veröffentlichungstag der Anmeldung: **12.01.2005**
(21) Anmeldenummer: 03015818.2
(22) Anmeldetag: 10.07.2003
(51) Int. Cl.: B60R 22/46

(54) **Sicherheitsgurtvorrichtung**

(71) Anmelder: Delphi Technologies, Inc., Troy, MI 48007 (US)
(72) Erfinder: Maierhofer, Gunter, 10249 Berlin (DE); Adomeit, Julius, 14195 Berlin (DE)
(74) Vertreter: Manitz, Finsterwald & Partner GbR

(57) **Zusammenfassung**

Die Erfindung betrifft eine Sicherheitsgurtvorrichtung für Kraftfahrzeuge mit einem Sicherheitsgurt (11), einem Gurtaufroller (13) und einem Antrieb (15,17) für den Aufroller (13), wobei der Antrieb einen Elektromotor (15) und einen mit dem Motor gekoppelten mechanischen Energiespeicher (17) umfasst, und wobei der Motor (15) in Abhängigkeit von einem Ansteuersignal wahlweise entweder in einem vom Aufroller (13) entkoppelten Speichermodus zum Füllen des Energiespeichers (17) oder in einem Aufwickelmodus betreibbar ist, in welchem der Motor (15) mit dem Aufroller (13) gekoppelt und der Aufroller (13) durch ein von dem Motor (15) und dem zuvor gefüllten Energiespeicher (17) gemeinsam aufgebrachtes Moment in Aufwickelrichtung (W) angetrieben ist.

## Beschreibung

Die Erfindung betrifft eine Sicherheitsgurtvorrichtung für Kraftfahrzeuge mit einem Sicherheitsgurt, einem Gurtaufroller und einem Antrieb für den Aufroller.

Derartige Sicherheitsgurtvorrichtungen sind grundsätzlich bekannt. Mittels des Antriebs kann beispielsweise eine so genannte Pre-Safe- oder Pre-Crash-Funktion realisiert werden, indem bei einem Unfall unmittelbar vor dem Aufprall des Fahrzeugs auf ein Hindernis der Aufroller in Aufwickelrichtung angetrieben wird, um dafür zu sorgen, dass der Gurt rechtzeitig eng am Körper des jeweiligen Fahrzeuginsassen anliegt. Problematisch hierbei ist, dass innerhalb einer sehr kurzen Zeitspanne von beispielsweise 250 ms eine hohe Leistung auf den Aufroller aufgebracht werden muss. Hierzu ist für den Antrieb ein leistungsstarker und damit großer und teurer Elektromotor erforderlich.

Es ist das der Erfindung zugrunde liegende Problem (Aufgabe), eine Sicherheitsgurtvorrichtung der eingangs genannten Art zu schaffen, die bei möglichst einfachem und kostengünstigem Aufbau eine sichere und zuverlässige Funktionsweise ermöglicht und insbesondere in der Lage ist, die zur Realisierung einer Pre-Safe- bzw. Pre-Crash-Funktion erforderlichen hohen Leistungen innerhalb kürzester Zeit auf den Aufroller aufzubringen.

Die Lösung dieser Aufgabe erfolgt durch die Merkmale des Anspruchs 1 und insbesondere dadurch, dass der Antrieb einen Elektromotor und einen mit dem Motor gekoppelten mechanischen Energiespeicher umfasst, wobei der Motor in Abhängigkeit von einem Ansteuersignal wahlweise entweder in einem vom Aufroller entkoppelten Speichermodus zum Füllen des Energiespeichers oder in einem Aufwickelmodus betreibbar ist, in welchem der Motor mit dem Aufroller gekoppelt und der Aufroller durch ein von dem Motor und dem zuvor gefüllten Energiespeicher gemeinsam aufgebrachtes Moment in Aufwickelrichtung angetrieben ist.

Erfindungsgemäß wird der Elektromotor im "Ernstfall", d.h. wenn der Aufroller in Aufwickelrichtung angetrieben werden soll, von einem Energiespeicher unterstützt, der zuvor vom Motor selbst gefüllt wurde. Mit der Erfindung kann in vorteilhafter Weise der Umstand ausgenutzt werden, dass während des Normalbetriebs des Fahrzeugs ausreichend Zeit zur Verfügung steht, in welcher der Energiespeicher "in Ruhe" gefüllt werden kann. Hierzu wird erfindungsgemäß der Antriebsmotor selbst eingesetzt, so dass keine Zusatzsysteme erforderlich sind.

Durch diesen Hybridantrieb kann erfindungsgemäß ein vergleichsweise kleiner Elektromotor mit relativ geringer Leistung für den Aufrollerantrieb verwendet werden, da zum Füllen des Energiespeichers genügend Zeit zur Verfügung steht, d.h. vom Motor keine übermäßig hohen Leistungsspitzen erbracht werden müssen, und im Pre-Safe- bzw. Pre-Crash-Fall die dann erforderliche hohe Leistung von dem Motor und dem zuvor gefüllten Energiespeicher, die dann gewissermaßen "am gleichen Strang ziehen", gemeinsam bereitgestellt wird.

Die Auslegung des Elektromotors und des Energiespeichers erfolgt in Abhängigkeit von den jeweiligen Anforderungen. Es kann beispielsweise eine etwa gleichmäßige Aufteilung derart erfolgen, dass ein auf den Gurtaufroller aufzubringendes Drehmoment jeweils etwa zur Hälfte vom Elektromotor und vom Energiespeicher bereitgestellt wird.

Rein beispielhaft sei erwähnt, dass in einer möglichen Ausführungsform der Motor und der Energiespeicher jeweils mit etwa 6 Nm beitragen können. Zur Realisierung der Pre-Safe- bzw. Pre-Crash-Funktion, die von der eigentlichen Gurtstraffung zu unterscheiden ist, kann der Antrieb weiter derart ausgelegt sein, dass auf den Sicherheitsgurt eine Maximalkraft von 200 N aufgebracht wird. Die für die eigentliche Gurtstraffung auf den Gurt aufgebrachten Kräfte liegen etwa eine Größenordnung höher und betragen beispielsweise ungefähr 2000 N. Im Prinzip ist es nichtsdestoweniger möglich, das erfindungsgemäße Konzept auch für die eigentliche Gurtstraffung einzusetzen.

Vorteilhafte Ausführungsformen der Erfindung sind in den Unteransprüchen, der Beschreibung sowie der Zeichnung angegeben.

In einem besonders bevorzugten Ausführungsbeispiel umfasst der mechanische Energiespeicher eine mittels des Motors spannbare Feder, bei der es sich insbesondere um eine Spiralfeder handeln kann.

Wie bereits vorstehend erwähnt, kann eine kompakte und kostengünstige Bauweise durch die Wahl eines vergleichsweise kleinen Elektromotors mit relativ geringer Leistung realisiert werden, wenn der Motor hinsichtlich der erforderlichen Aufwickelleistung unterdimensioniert ist, so dass die benötigte Aufwickelleistung von dem Motor und dem gefüllten Energiespeicher gemeinsam aufzubringen ist.

Der Motor kann hinsichtlich der benötigten Speicherleistung derart dimensioniert sein, dass zum Füllen des Energiespeichers eine Speicherzeitspanne nötig ist, die länger als die zum Aufbringen der erforderlichen Aufwickelleistung zur Verfügung stehende Aufwickelzeitspanne ist. Die Speicherzeitspanne kann beispielsweise mehrere Sekunden betragen.

Es kann erfindungsgemäß vorgesehen sein, dass beim Anlassen des Fahrzeugs immer der Elektromotor derart angesteuert wird, dass er im Speichermodus betrieben wird, bis der Energiespeicher gefüllt - beispielsweise eine Spiralfeder gespannt - ist. Eine solche Speicherzeitspanne steht während des Fahrzeugbetriebs problemlos zur Verfügung, ohne dass die Fahrzeugsicherheit in irgendeiner Weise beeinträchtigt wird. Alternativ oder zusätzlich kann ein "Intervall-Speicherbetrieb" vorgesehen werden, bei dem in regelmäßigen Abständen während des normalen Fahrzeugbetriebs der Motor in den Speichermodus geschaltet wird, um einen stets vollständig gefüllten Energiespeicher zu gewährleisten.

In einem weiteren Ausführungsbeispiel der Erfindung kann vorgesehen sein, dass ein zwischen dem Motor und dem Energiespeicher vorgesehenes Getriebe selbsthemmend ausgebildet ist. Hierdurch kann insbesondere im Fall einer als Energiespeicher dienenden Feder verhindert werden, dass sich die Feder wieder entspannt, wenn der Motor nach Abschluss des Speicherbetriebs abgeschaltet wird. Im Normalbetrieb des Fahrzeugs kann der Motor auf diese Weise stromlos gehalten werden. Bei dem Getriebe kann es sich beispielsweise um ein selbsthemmendes oder quasi-selbsthemmendes Schneckengetriebe handeln, bei dem die Selbsthemmung einfach durch Reibung beispielsweise zwischen einem Schneckenrad und einem Zahnrad erfolgen kann.

Grundsätzlich ist der Aufbau der erfindungsgemäßen Sicherheitsgurtvorrichtung beliebig, solange sichergestellt ist, dass im Aufwickelmodus das Moment des Elektromotors einerseits und das Moment des zuvor gefüllten Energiespeichers andererseits zusammenwirken, d. h. ein gemeinsames Antreiben des Aufrollers in Aufwickelrichtung durch Motor und Energiespeicher gewährleistet ist.

In einem besonders bevorzugten Ausführungsbeispiel weisen der Motor und der Energiespeicher, insbesondere eine als Energiespeicher vorgesehene Feder, eine gemeinsame Drehachse auf. Dabei kann die Feder drehfest auf eine Antriebswelle des Motors angeordnet sein. Hierdurch ist auf besonders einfache Weise sichergestellt, dass in der einen Drehrichtung des Motors die Feder gespannt wird, während beim Betrieb des Motors mit umgekehrter Polarität im Aufwickelmodus zusätzlich das Drehmoment der sich entspannenden Feder über die Antriebswelle auf den Aufroller aufgebracht wird.

Der Aufroller kann eine von der gemeinsamen Drehachse des Motors und der Feder verschiedene Drehachse aufweisen. Beispielsweise können die Drehachsen parallel zueinander verlaufen. Die Kraftübertragung kann dann z.B. durch entsprechend ausgelegte Zahnradgetriebe erfolgen, was außerdem die Möglichkeit eröffnet, bestimmte Über- oder Untersetzungen zu realisieren, falls dies für den jeweiligen Anwendungsfall sinnvoll und wünschenswert ist.

Alternativ kann die Drehachse des Aufrollers mit der gemeinsamen Drehachse des Motors und der Feder zusammenfallen.

Mit den erwähnten Konfigurationsmöglichkeiten bietet die erfindungsgemäße Sicherheitsgurtvorrichtung ein hohes Maß an Vielseitigkeit, das es gestattet, mit der Sicherheitsgurtvorrichtung unter Beibehaltung ihres vorteilhaft kompakten und preisgünstigen Aufbaus und ihrer sicheren Funktionsweise eine gezielte Anpassung an die jeweiligen Gegebenheiten zu realisieren.

Gemäß einem weiteren Ausführungsbeispiel der Erfindung kann vorgesehen sein, dass der Motor eine sowohl von der Drehachse des Energiespeichers, insbesondere einer als Energiespeicher vorgesehenen Feder, als uch von der Drehachse des Aufrollers verschiedene Drehachse aufweist.

Die vorstehend genannten Möglichkeiten für die Anordnung der Drehachsen der einzelnen Bauteile sind nicht auf Ausführungsformen mit einer Feder als Energiespeicher beschränkt. Grundsätzlich kommen erfindungsgemäß auch andere Energiespeicher in Frage, die sich mittels des Motors insbesondere unter Ausnutzung der Drehbewegung einer Antriebswelle des Motors füllen lassen.

Wie bereits vorstehend erwähnt, wird in dem bevorzugten Ausführungsbeispiel der Elektromotor während des Speichermodus zum Füllen des Energiespeichers in der einen Drehrichtung betrieben, während er zum Antreiben des Aufrollers im Aufwickelmodus in der anderen Drehrichtung betrieben wird. Um während des Speichermodus ein Abwickeln des Sicherheitsgurtes von dem Aufroller zu verhindern, ist in einem besonders bevorzugten Ausführungsbeispiel der Erfindung vorgesehen, dass zwischen dem Antrieb und dem Aufroller eine Kupplung vorgesehen ist.

Vorzugsweise handelt es sich hierbei um eine mechanische Kupplung, die im Aufwickelmodus den Antrieb mit dem Aufroller koppelt und im Speichermodus für eine Entkoppelung zwischen Antrieb und Aufroller sorgt.

Des Weiteren ist die Kupplung bevorzugt derart ausgelegt, dass sie mittels des Antriebs betätigbar ist und in Abhängigkeit von der Drehrichtung einer Antriebswelle des Antriebs automatisch zwischen gekoppeltem und entkoppeltem Zustand umschaltet. Der Antrieb selbst sorgt hierbei für die korrekte Konfiguration der insofern drehrichtungsspezifischen Kupplung.

Die Kupplung kann eine mit dem Antrieb zwangsgekoppelte Mitnehmeranordnung für wenigstens einen bei aktiviertem Antrieb um eine Drehachse des Antriebs und/oder des Aufrollers rotierenden Mitnehmer umfassen, der zum Umsteuern zwischen gekoppeltem und entkoppeltem Zustand um eine parallel zur Drehachse verlaufende Achse schwenkbar ist.

Dabei kann der Mitnehmer radial innerhalb oder außerhalb einer drehfest mit dem Aufroller verbundenen Verzahnung angeordnet und zur Mitnahme des Aufrollers im Aufwickelmodus mit einem Eingriffsabschnitt in die Verzahnung einschwenkbar sein.

Des Weiteren wird erfindungsgemäß vorgeschlagen, dass zum Umsteuern des Mitnehmers eine mitnehmerfeste und gehäusefeste Komponenten aufweisende Steuereinrichtung vorgesehen ist, mit der eine Drehbewegung des Mitnehmers relativ zu einem Gehäuse in eine Schwenkbewegung des Mitnehmers umsetzbar und insbesondere auch die Aufrechterhaltung des durch die Schwenkbewegung hergestellten gekoppelten bzw. entkoppelten Zustands des Mitnehmers gewährleistet ist.

Die Steuereinrichtung kann eine Drehfeder umfassen, die auf dem Mitnehmer um eine zu dessen Schwenkachse parallel versetzte Achse drehbar gelagert und mit ihren Schenkeln zwischen einen den Mitnehmer schwenkbar haltenden Träger und eine gehäusefeste Verzahnung oder Zahnstruktur gespannt ist.

Der Mitnehmer kann mittels der Drehfeder in eine Entkoppelungsstellung vorgespannt sein.

In einer weiteren zweckmäßigen Ausgestaltung der Erfindung weist der Mitnehmer einen axial vorstehenden Steuervorsprung auf, über den der im Aufwickelmodus rotierende Mitnehmer durch eine gehäusefeste Verzahnung oder Zahnstruktur in eine Koppelungsstellung schwenkbar ist.

Die gehäusefeste Verzahnung oder Zahnstruktur kann derart ausgelegt sein, dass sie durch den zuvor in Koppelungsstellung geschwenkten rotierenden Mitnehmer überwindbar und insbesondere elastisch auslenkbar und/oder verformbar ist.

Die Erfindung wird im Folgenden beispielhaft unter Bezugnahme auf die Zeichnung beschrieben. Es zeigen:
- Fig. 1 - 4: verschiedene Ansichten einer Sicherheitsgurtvorrichtung gemäß einer ersten Ausführungsform der Erfindung,
- Fig. 5 - 10: verschiedene Ansichten einer Sicherheitsgurtvorrichtung gemäß einer zweiten Ausführungsform der Erfindung, und
- Fig. 11: schematisch eine dritte Ausführungsform einer Sicherheitsgurtvorrichtung gemäß der Erfindung.

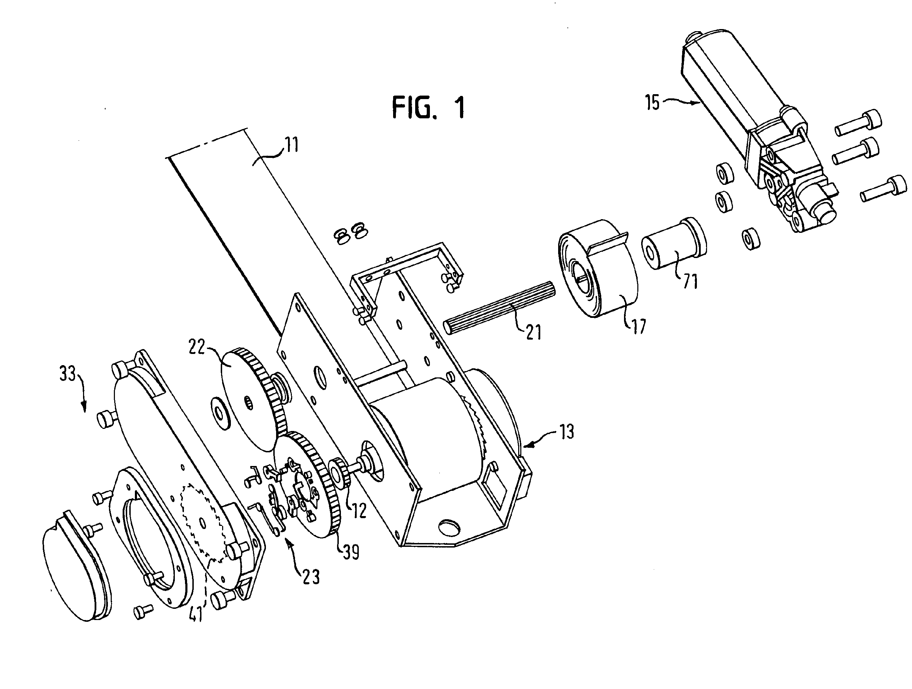

Bei der in den Fig. 1 - 4 dargestellten ersten Ausführungsform der Erfindung umfasst die Sicherheitsgurtvorrichtung einen Elektromotor 15 mit einer Antriebswelle 21, auf der mittels einer Mitnahmehülse 71 eine als Energiespeicher dienende Spiralfeder 17 drehfest angeordnet ist.

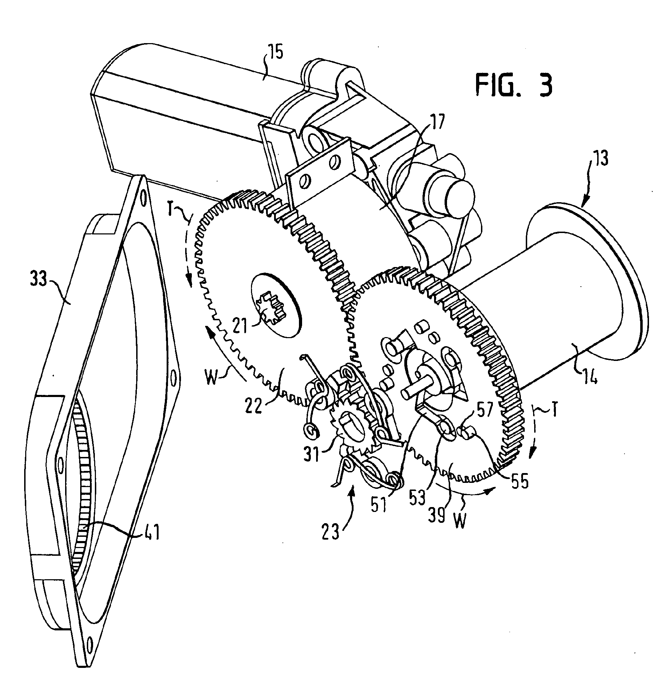

Über ein auf der Antriebswelle 21 sitzendes Antriebszahnrad 22 ist ein Trägerzahnrad 39 antreibbar, mit dem die Drehbewegung über ein Aufrollerzahnrad 12 auf eine Spindel 14 (vgl. insbesondere Fig. 3) eines Gurtaufrollers 13 übertragen werden kann, auf dem ein Sicherheitsgurt 11 aufgewickelt ist.

Zwischen dem Trägerzahnrad 39 - und damit dem von dem Motor 15 und der Feder 17 gebildeten Antrieb - und dem Aufrollerzahnrad 22 - und damit dem Aufroller 13 - ist eine Kupplung 23 vorgesehen, auf die nachstehend näher eingegangen wird und die automatisch dafür sorgt, dass in Abhängigkeit von der Drehrichtung der Antriebswelle 21 und damit der Polung des Elektromotors 15 der Aufroller 13 in der einen Drehrichtung W mit dem Antrieb 15, 17 gekoppelt und in der entgegen gesetzten Drehrichtung T entkoppelt ist.

Ein seitliches Gehäuse 33 zur Unterbringung der Zahnräder 22, 39 sowie der Kupplung 23 bildet mit einer gehäusefesten Verzahnung 41 (vgl. insbesondere Fig. 3) einen Bestandteil der Kupplung 23. Hierauf wird nachstehend ebenfalls näher eingegangen.

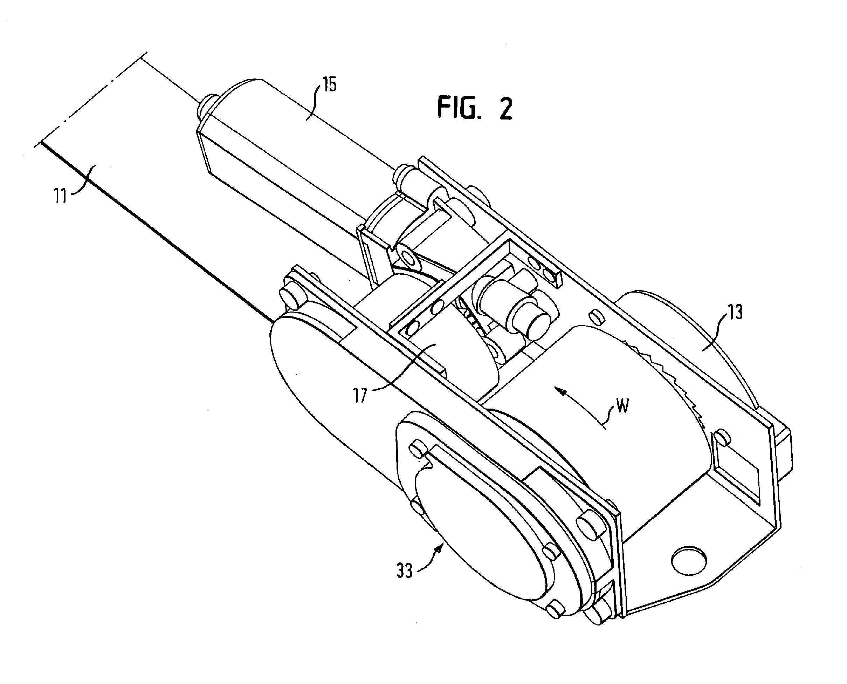

Die den zusammengesetzten Zustand der Sicherheitsgurtvorrichtung darstellende Fig. 2 zeigt die eine optimale Platzausnutzung ermöglichende kompakte Bauweise, die in diesem Ausführungsbeispiel durch die Unterteilung des Antriebszuges in die gemeinsame Achse des Motors 15 und der Feder 17 einerseits und die Achse des Aufrollers 13 andererseits sowie durch die in dem flachen Seitengehäuse 33 untergebrachte Getriebe- und Kupplungsanordnung ermöglicht wird.

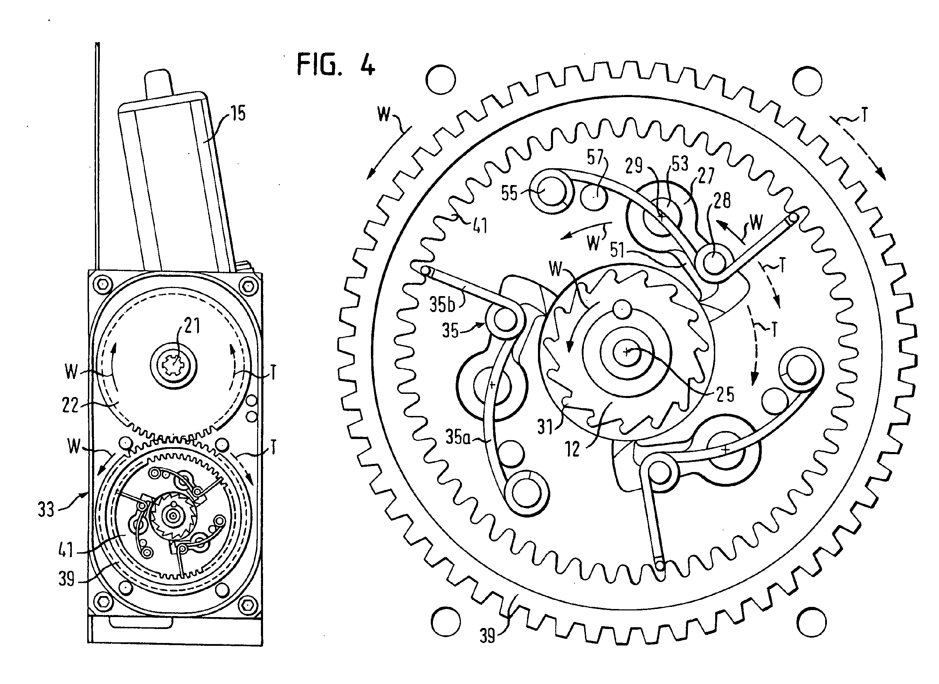

Zum Spannen der Feder 17 - und damit zum Füllen des von der Feder 17 gebildeten Energiespeichers - wird der Motor 15 in der Drehrichtung T (vgl. insbesondere Fig. 3 und 4) angetrieben. Die Kupplung 23 sorgt automatisch dafür, dass in diesem auch als Speichermodus bezeichneten Betriebszustand der Aufroller 13 vom Antrieb 15, 17 entkoppelt ist, um ein unerwünschtes Abwickeln des Sicherheitsgurtes 11 zu verhindern.

Ist im Fall einer Pre-Safe- bzw. Pre-Crash-Situation ein Aufwickeln des Gurtes 11 erforderlich, wird der Elektromotor 15 mittels eines entsprechenden Ansteuersignals veranlasst, die Antriebswelle 21 in die entgegengesetzte Aufwickelrichtung W zu drehen. Die Kupplung 23 sorgt hierbei automatisch für eine Mitnahme des Aufrollerzahnrades 12 und damit für das erwünschte Aufwickeln des Gurtes 11. Wegen der sich in diesem Aufwickelmodus addierenden Drehmomente des Motors 15 einerseits und der Feder 17 andererseits braucht die benötigte Spitzenleistung nicht vom Motor 15 alleine aufgebracht zu werden, sondern das kurzzeitig erforderliche hohe Drehmoment wird vom Motor 15 und der Feder 17 gemeinsam über die Antriebswelle 21 sowie die Getriebe- und Kupplungsanordnung 22, 39, 23 auf das Aufrollerzahnrad 12 und damit den Aufroller 13 aufgebracht.

Die Kupplung (vgl. insbesondere Fig. 3 und 4) umfasst drei jeweils mit klauenartigen Eingriffsabschnitten versehene Mitnehmer 27, die in Aufnahmen 51 des Trägerzahnrades 39 um Zapfen 53 verschwenkbar gelagert sind. Die Mitnehmer 27 sind in Umfangsrichtung gleichmäßig verteilt um die Aufrollerachse 25 angeordnet.

Die im Trägerzahnrad 39 ausgebildeten Mitnehmeraufnahmen 51 sind derart ausgelegt, dass die Mitnehmer 27 in und außer Eingriff mit dem eine entsprechende äußere Klauenverzahnung 31 aufweisenden Aufrollerzahnrad 12 geschwenkt werden können, das in einer zentralen Ausnehmung des Trägers 39 angeordnet ist.

Die Umsteuerung der Mitnehmer 27 zwischen dem in Fig. 4 dargestellten entkoppelten Zustand (Speichermodus) und dem eingekoppelten Zustand (Aufwickelmodus) erfolgt automatisch in Abhängigkeit von der Drehrichtung der Antriebswelle 21 und damit des Trägerzahnrades 39 mittels einer Steuereinrichtung, welche Drehfedern 35 und die bereits erwähnte, am Gehäuse 33 ausgebildete Verzahnung 41 (vgl. insbesondere Fig. 3) umfasst.

Die Drehfedern 35 sind auf axial vorstehende Zapfen 28 der Mitnehmer 27 gesteckt. Der eine Schenkel 35a der Drehfedern 35 ist jeweils um einen trägerfesten Vorsprung 57 herumgeführt und mit seinem Ende an einen weiteren trägerfesten Zapfen 55 gehalten. Die relative Anordnung der Zapfen bzw. Vorsprünge 55, 57 und 28 ist derart gewählt, dass die Schenkel 35a der Drehfedern 35 jeweils unter permanenter Vorspannung derart stehen, dass die Mitnehmer 27 in die in Fig. 4 dargestellte Entkopplungsstellung vorgespannt sind. Die anderen Schenkel 35b der Drehfedern 27 stehen jeweils mit ihrem abgewinkelten freien Ende in Eingriff mit der gehäusefesten Verzahnung 41.

In Abhängigkeit von der Drehrichtung der Antriebswelle 21 und damit des Trägerzahnrades 39 (vgl. insbesondere auch die kleine Darstellung links in Fig. 4) bewegt sich die Anordnung aus Mitnehmer 27 und Drehfeder 35 bezüglich des zunächst noch in einer Lücke der Verzahnung 41 festgehaltenen Drehfederschenkels 35b entweder in Speicherrichtung T oder in Aufwickelrichtung W, wie es in Fig. 4 am Beispiel der oberen Mitnehmeranordnung durch die Pfeile angedeutet ist.

Die mit der Drehbewegung des Trägerzahnrades 39 verbundene Änderung der Relativorientierung zwischen Drehfederschenkel 35b und Mitnehmer 27 sorgt bei Rotation des Trägerzahnrades 39 in Speicherrichtung T für eine Aufrechterhaltung der Entkopplungsstellung der Mitnehmer 27, während bei einer Drehung in Aufwickelrichtung W die Drehfedern 35 jeweils für ein Einsteuern der klauenförmigen Eingriffsabschnitte durch Verschwenken der Mitnehmer 27 in Richtung des Aufrollerzahnrades 12 sorgen.

Aufgrund der vergleichsweise hohen Drehgeschwindigkeit des Trägerzahnrades 39 bewegen sich die freien Eingriffsenden der mit der gehäusefesten Verzahnung 41 zusammenwirkenden Federschenkel 35b praktisch auf dem Kopfkreis der Verzahnung 41, d.h. sie springen nicht "von Lücke zu Lücke", sondern von Kopf zu Kopf, so dass insgesamt sowohl bei Drehung während des Speichermodus (Drehrichtung T) als auch des Aufwickelmodus (Drehrichtung W) ein stabiler Entkoppelungs- bzw. Koppelungszustand der Mitnehmer 27 gewährleistet ist.

Im Aufwickelmodus bei in der Drehrichtung W angetriebenem Trägerzahnrad 39 stellt die Steuereinrichtung aus Drehfedern 37 (mitnehmerfeste Komponenten) und Verzahnung 41 (gehäusefeste Komponente) somit nicht nur das anfängliche Einschwenken der klauenförmigen Eingriffsabschnitte der Mitnehmer 27 in die Verzahnung 31 des Aufrollerzahnrades 12 sicher, sondern gewährleistet auch die Aufrechterhaltung dieses für den Antrieb des Aufrollers 13 in Aufwickelrichtung W sorgenden Eingriffszustands.

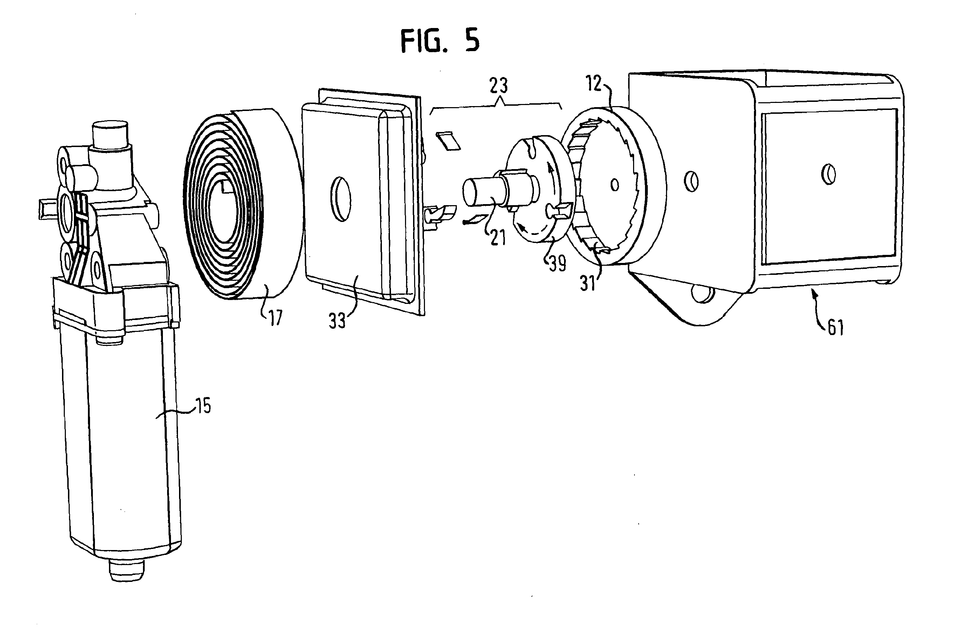

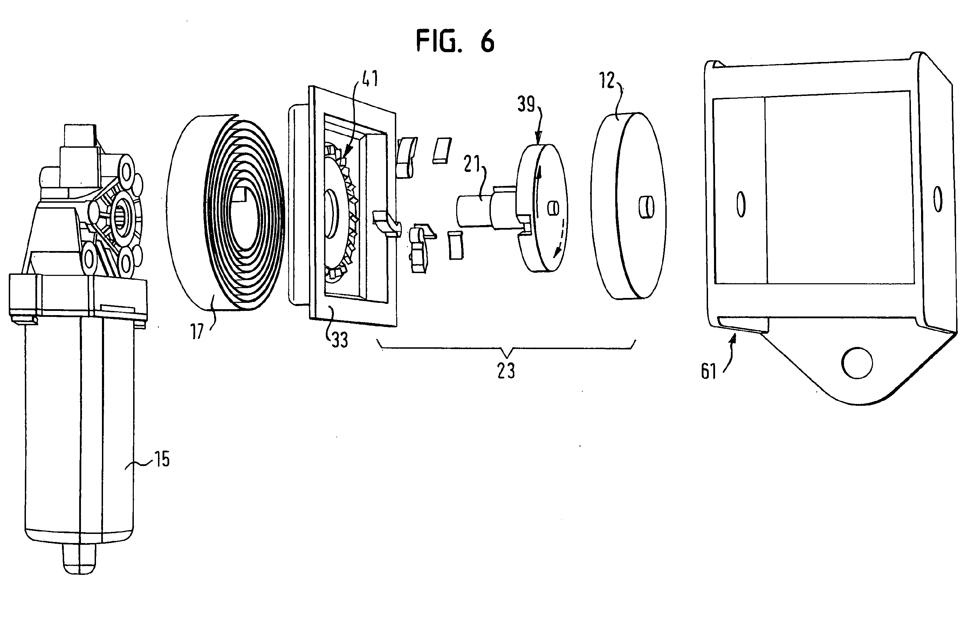

In der in den Fig. 5 bis 10 dargestellten zweiten Ausführungsform einer erfindungsgemäßen Sicherheitsgurtvorrichtung sind der Motor 15, die als Energiespeicher dienende Feder 17 und der Aufroller, von dem lediglich das Aufrollerzahnrad 12 und ein Aufrollergehäuse 61 dargestellt sind, auf einer einzigen gemeinsamen Achse angeordnet.

Die Antriebswelle 21 ist mit ihrem einen Ende mit dem Motor 15 gekoppelt und trägt an ihrem anderen Ende ein Trägerrad 39, das Bestandteil einer nachstehend näher erläuterten Kupplung 23 ist und in Abhängigkeit von der Drehrichtung der Antriebswelle 21 entweder das mit einer Innenverzahnung 31 versehene Aufrollerzahnrad 12 antreibt oder von dem Aufrollerzahnrad 12 entkoppelt ist.

Die Kupplung 23 umfasst drei jeweils ein klauenförmiges Eingriffsende aufweisende Mitnehmer 27, die in Aufnahmen 51, die am Trägerrad 39 ausgebildet sind, verschwenkbar gelagert sind. In Abhängigkeit von der Schwenkstellung der Mitnehmer 27 befinden sich diese - und damit das Trägerrad 39 - in oder außer Eingriff mit der Innenverzahnung 31 des Aufrollerzahnrades 12.

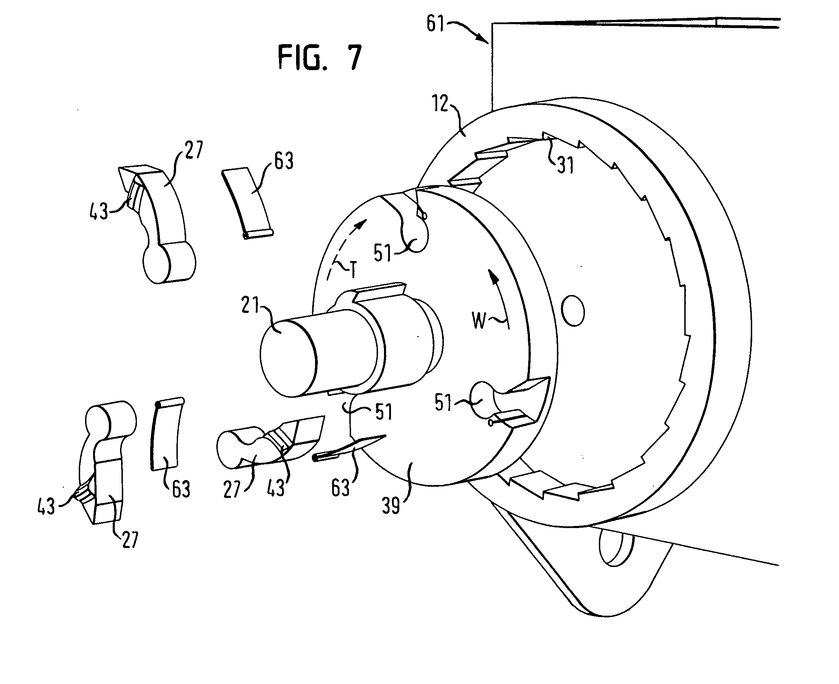

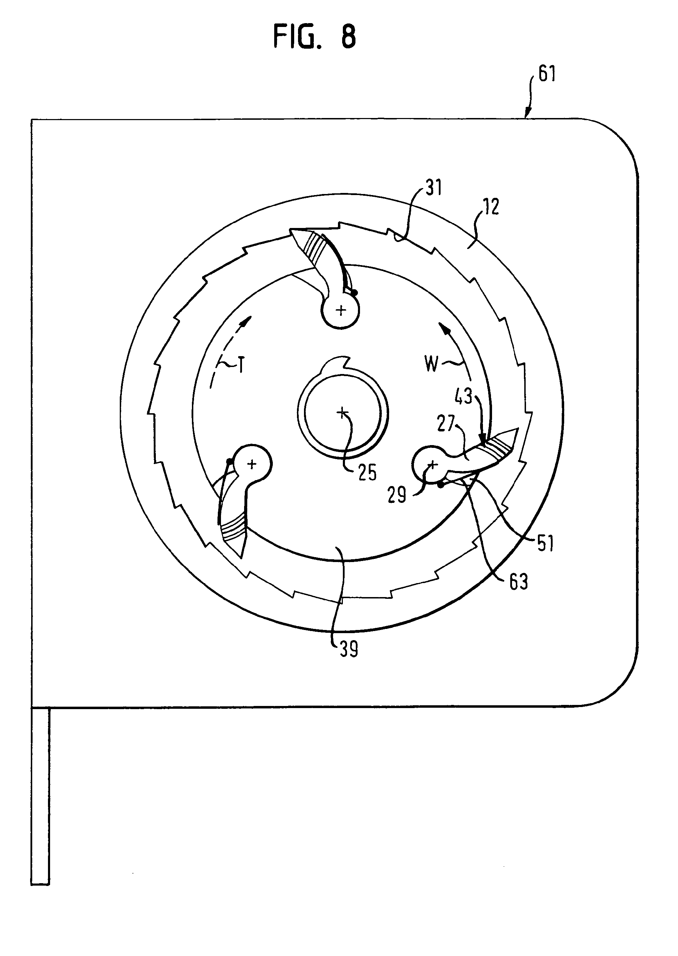

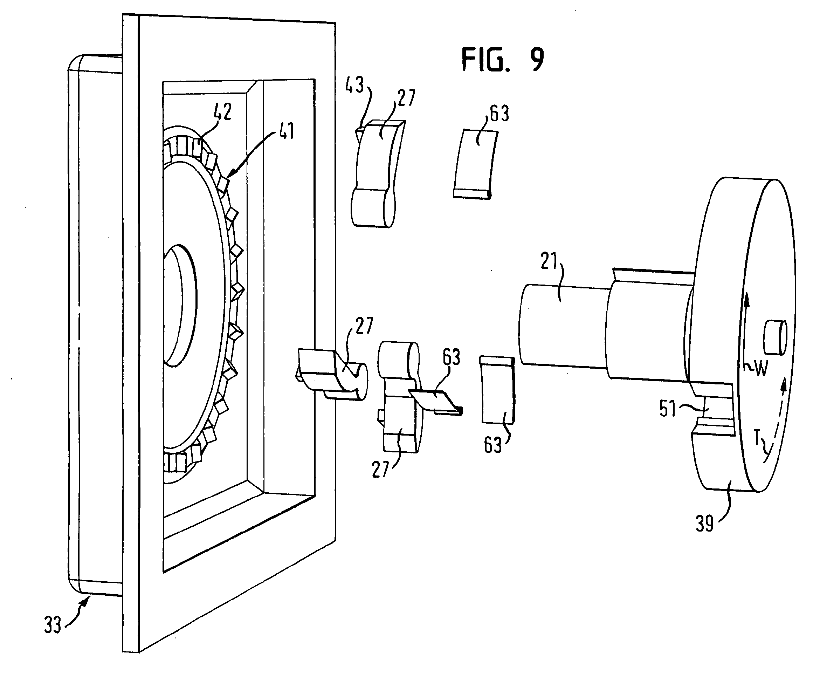

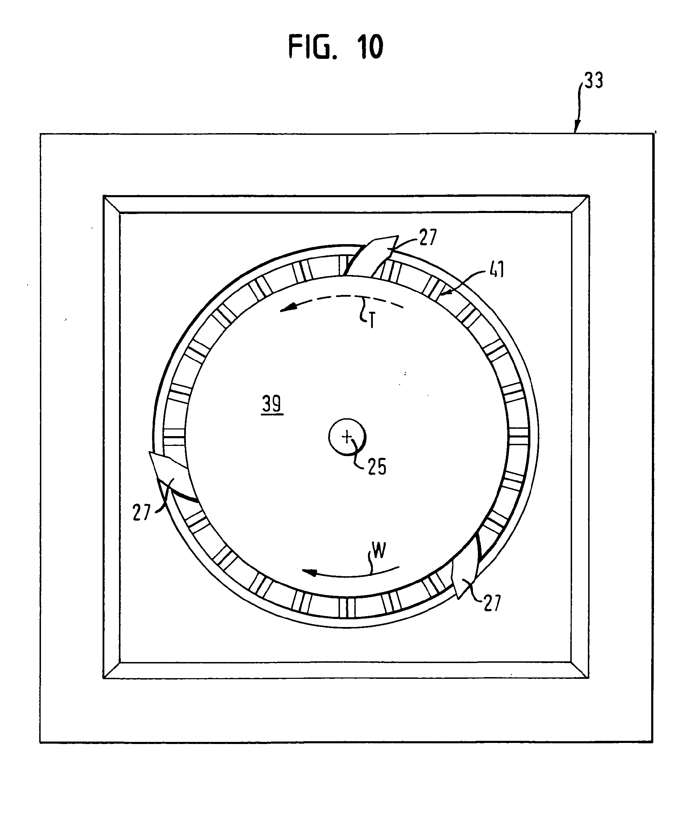

Die Fig. 7 und 8 zeigen die Funktionsweise der Kupplung 23 erläuternde Ansichten in Richtung des Aufrollergehäuses 61, während die Fig. 9 und 10 Ansichten in die entgegen gesetzte Richtung zeigen. Insbesondere Fig. 8 ist zu entnehmen, dass jedem Mitnehmer 27 ein Federelement 63 zugeordnet ist, das derart am Trägerrad 39 angebracht ist, dass die Mitnehmer 27 jeweils außer Eingriff mit der Verzahnung 31 des Aufrollerzahnrades 12 vorgespannt sind.

Auf ihrer dem Motor 15 zugewandten Seite sind die Mitnehmer 27 jeweils mit einem axial vorstehenden Steuervorsprung 43 versehen, der mit einer Verzahnung oder Zahnstruktur 41 (vgl. insbesondere Fig. 9) zusammenwirkt, die an der Innenseite eines im zusammengesetzten Zustand die Kupplung 23 einschließlich des Trägerrades 39 sowie das Aufrollerzahnrad 12 unterbringenden Gehäuses 33 (vgl. insbesondere Fig. 5) ausgebildet ist. Die gehäusefeste Verzahnung 41 umfasst eine Mehrzahl von wie Zähne eines Zahnrades angeordneten axialen Vorsprüngen 42 aus einem elastisch verformbaren Material.

Bei rotierendem Trägerrad 39 kämmen die Steuervorsprünge 43 der Mitnehmer 27 mit der gehäusefesten elastischen Zahnstruktur 41 derart, dass im Aufwickelmodus (Drehrichtung W) die Mitnehmer 27 über ihre Steuervorsprünge 43 durch die elastischen Zähne 42 radial nach außen und damit in Eingriff mit der Verzahnung 31 des Aufrollerzahnrades 12 geschwenkt werden. Durch die elastische Verformbarkeit bzw. Auslenkbarkeit der gehäusefesten Vorsprünge 42 sind diese im Anschluss an die Herstellung des Eingriffszustandes zwischen Mitnehmern 27 und Aufrollerzahnrad 12 bei weitergehender Rotation des Trägerrades 39 in Aufwickelrichtung W von den Mitnehmern 27 bzw. deren Steuervorsprüngen 43 überwindbar, so dass der Antrieb des Aufrollers durch die gehäusefeste elastische Zahnstruktur 41 nicht beeinträchtigt wird.

Entsprechendes gilt für den Speichermodus bei Rotation des Trägerrades 39 in Speicherrichtung T, bei der die elastischen Vorsprünge 42 der Verzahnung 41 zusammen mit den Federelementen 63 für die Herstellung und Aufrechterhaltung der Entkoppelungsstellung der Mitnehmer 27 sorgen.

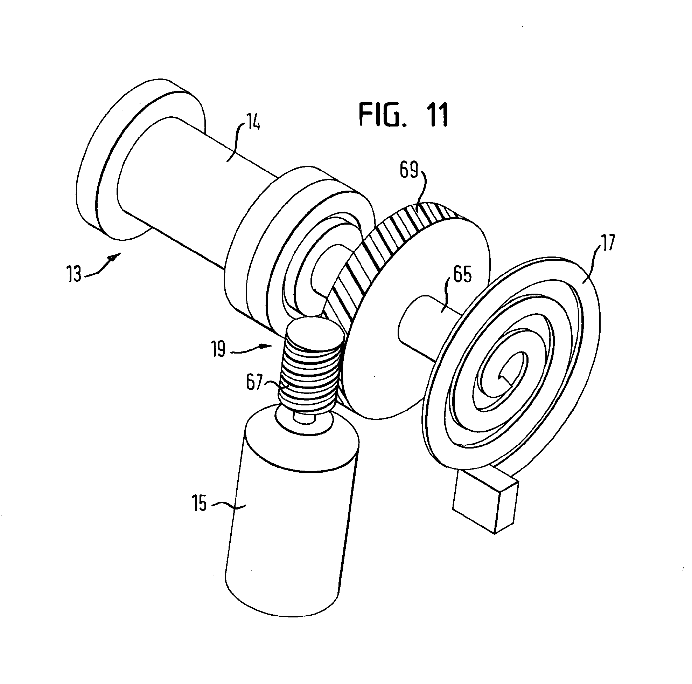

Bei dem in Fig. 11 schematisch gezeigten dritten Ausführungsbeispiel einer erfindungsgemäßen Sicherheitsgurtvorrichtung sind die Spindel 14 des Aufrollers 13 und die als Energiespeicher dienenden Feder 17 auf einer gemeinsamen Antriebswelle 65 angeordnet. Der Elektromotor 15 ist nicht direkt, sondern über ein Schneckengetriebe 19 mit der Antriebswelle 65 gekoppelt, das ein mit der Antriebswelle des Motors 15 verbundenes Schneckenrad 67 und ein drehfest auf der Antriebswelle 27 angeordnetes Zahnrad 69 umfasst.

Um für eine Entkoppelung der Spindel 14 des Aufrollers 13 von der Antriebswelle 65 im Speichermodus zum Spannen der Feder 17 sicherzustellen, kann beispielsweise in dem Bereich zwischen dem Zahnrad 69 und der Spindel 14 eine Kupplung angeordnet sein, die z. B. derart ausgebildet ist, wie es vorstehend in Verbindung mit den beiden anderen Ausführungsformen beschrieben wurde.

In allen Ausführungsbeispielen kann in dem Antriebsstrang zwischen Motor und Aufroller eine Selbsthemmung derart realisiert werden, dass bei nach dem Spannen der Feder 17 ausgeschaltetem und stromlos gehaltenem Motor 15 eine Entspannung der Feder 17 ohne weitere Maßnahmen unterbunden ist. Diese Selbsthemmung kann beispielsweise einfach durch Reibung zwischen den Getriebekomponenten erreicht werden. Mit beginnender Rotation der Antriebswelle des Motors 15 in Aufwickelrichtung W wird die Selbsthemmung überwunden, woraufhin sich die Feder 17 entspannen kann, um gemeinsam mit dem Motor 15 innerhalb kurzer Zeit eine hohe Leistung bereitzustellen und ein ausreichend großes Drehmoment auf die Spindel 14 des Aufrollers 13 zum Aufwickeln des Gurtes 11 aufzubringen.

### Bezugszeichenliste

- 11: Gurt
- 12: Aufrollerzahnrad
- 13: Aufroller
- 14: Spindel des Aufrollers
- 15: Motor
- 17: Energiespeicher, Feder
- 19: Getriebe
- 21: Antriebswelle des Motors
- 22: Antriebszahnrad
- 23: Kupplung
- 25: Drehachse des Aufrollers
- 27: Mitnehmer
- 28: Federzapfen
- 29: Schwenkachse des Mitnehmers
- 31: Verzahnung des Aufrollers
- 33: Gehäuse
- 35: Drehfeder einer Steuereinrichtung
- 35a: Schenkel der Drehfeder
- 35b: Schenkel der Drehfeder
- 39: Träger, Trägerzahnrad
- 41: gehäusefeste Verzahnung bzw. Zahnstruktur der Steuereinrichtung
- 42: Vorsprung der gehäusefesten Verzahnung bzw. Zahnstruktur
- 43: Steuervorsprung
- 51: Mitnehmeraufnahme
- 53: Mitnehmerzapfen
- 55: Schenkelzapfen
- 57: Schenkelvorsprung
- 61: Aufrollergehäuse
- 63: Federelement
- 65: gemeinsame Antriebswelle
- 67: Schneckenrad
- 69: Zahnrad
- 71: Mitnahmehülse

- T: Speicherrichtung
- W: Aufwickelrichtung

## Patentansprüche

1. Sicherheitsgurtvorrichtung für Kraftfahrzeuge mit
- einem Sicherheitsgurt (11),
- einem Gurtaufroller (13) und
- einem Antrieb (15, 17) für den Aufroller (13),
wobei der Antrieb einen Elektromotor (15) und einen mit dem Motor (15) gekoppelten mechanischen Energiespeicher (17) umfasst, und wobei der Motor (15) in Abhängigkeit von einem Ansteuersignal wahlweise entweder in einem vom Aufroller (13) entkoppelten Speichermodus zum Füllen des Energiespeichers (17) oder in einem Aufwickelmodus betreibbar ist, in welchem der Motor (15) mit dem Aufroller (13) gekoppelt und der Aufroller (13) durch ein von dem Motor (15) und dem zuvor gefüllten Energiespeicher (17) gemeinsam aufgebrachtes Moment in Aufwickelrichtung W angetrieben ist.

2. Vorrichtung nach Anspruch 1,
**dadurch gekennzeichnet,**
**dass** der mechanische Energiespeicher eine mittels des Motors (15) spannbare Feder (17) umfasst, insbesondere eine Spiralfeder.

3. Vorrichtung nach Anspruch 1 oder 2,
**dadurch gekennzeichnet,**
**dass** der Motor (15) hinsichtlich der erforderlichen Aufwickelleistung unterdimensioniert ist.

4. Vorrichtung nach einem der vorhergehenden Ansprüche,
**dadurch gekennzeichnet,**
**dass** der Motor (15) hinsichtlich der benötigten Speicherleistung derart dimensioniert ist, dass zum Füllen des Energiespeichers (17) eine Speicherzeitspanne nötig ist, die länger als die zum Aufbringen der erforderlichen Aufwickelleistung zur Verfügung stehende Aufwickelzeitspanne ist und insbesondere mehr als 1 Sekunde beträgt.

5. Vorrichtung nach einem der vorhergehenden Ansprüche,
**dadurch gekennzeichnet,**
**dass** eine Antriebswelle (21) des Antriebs (15, 17) im Speichermodus in der einen Drehrichtung T und im Aufwickelmodus in der entgegengesetzten Drehrichtung W antreibbar ist, insbesondere durch entsprechende Polung des Motors (15).

6. Vorrichtung nach einem der vorhergehenden Ansprüche,
**dadurch gekennzeichnet,**
**dass** ein zwischen dem Motor (15) und dem Energiespeicher (17) vorgesehenes Getriebe (19) selbsthemmend ausgebildet ist.

7. Vorrichtung nach einem der vorhergehenden Ansprüche,
**dadurch gekennzeichnet,**
**dass** der Motor (15) und der Energiespeicher (17), insbesondere eine Feder, eine gemeinsame Drehachse aufweisen, wobei vorzugsweise die Feder (17) drehfest auf einer Antriebswelle (21) des Motors (15) angeordnet ist.

8. Vorrichtung nach Anspruch 7,
**dadurch gekennzeichnet,**
**dass** der Aufroller (13) eine von der gemeinsamen Drehachse des Motors (15) und des Energiespeichers (17) verschiedene Drehachse aufweist, wobei vorzugsweise die beiden Drehachsen parallel zueinander verlaufen.

9. Vorrichtung nach Anspruch 7,
**dadurch gekennzeichnet,**
**dass** die Drehachse des Aufrollers (13) mit der gemeinsamen Drehachse des Motors (15) und des Energiespeichers (17) zusammenfällt.

10. Vorrichtung nach einem der Ansprüche 1 bis 6,
**dadurch gekennzeichnet,**
**dass** der Motor (15) eine sowohl von der Drehachse des Energiespeichers (17), insbesondere einer Feder, als auch von der Drehachse des Aufrollers (13) verschiedene Drehachse aufweist.

11. Vorrichtung nach einem der vorhergehenden Ansprüche,
**dadurch gekennzeichnet,**
**dass** zwischen dem Antrieb (15, 17) und dem Aufroller (13) eine mechanische Kupplung (23) vorgesehen ist, die im Aufwickelmodus den Antrieb (15, 17) mit dem Aufroller (13) koppelt und im Speichermodus für eine Entkoppelung zwischen Antrieb (15, 17) und Aufroller (13) sorgt.

12. Vorrichtung nach Anspruch 11,
**dadurch gekennzeichnet,**
**dass** die Kupplung (23) mittels des Antriebs (15, 17) betätigbar ist und in Abhängigkeit von der Drehrichtung W, T einer Antriebswelle (21) des Antriebs (15, 17) automatisch zwischen gekoppeltem und entkoppeltem Zustand umschaltet.

13. Vorrichtung nach Anspruch 11 oder 12,
**dadurch gekennzeichnet,**
**dass** die Kupplung (23) eine mit dem Antrieb (15, 17) zwangsgekoppelte Mitnehmeranordnung (27, 39) mit wenigstens einem bei aktiviertem Antrieb (15, 17) um die Drehachse (25) des Antriebs (15, 17) und/oder des Aufrollers (13) rotierenden, insbesondere klauenförmig ausgebildeten Mitnehmer (27) umfasst, der zum Umsteuern zwischen gekoppeltem und entkoppeltem Zustand um eine parallel zur Drehachse (25) verlaufende Achse (29) schwenkbar ist.

14. Vorrichtung nach Anspruch 13,
**dadurch gekennzeichnet,**
**dass** der Mitnehmer (27) radial innerhalb oder außerhalb einer drehfest mit dem Aufroller (13) verbundenen Verzahnung (31) angeordnet und zur Mitnahme des Aufrollers (13) im Aufwickelmodus mit einem Eingriffsabschnitt in die Verzahnung (31) einschwenkbar ist.

15. Vorrichtung nach Anspruch 13 oder 14,
**dadurch gekennzeichnet,**
**dass** zum Umsteuern des Mitnehmers (27) eine mitnehmerfeste und gehäusefeste Komponenten aufweisende Steuereinrichtung (35, 41) vorgesehen ist, mit der eine Drehbewegung des Mitnehmers (27) relativ zu einem Gehäuse (33) in eine Schwenkbewegung des Mitnehmers (27) umsetzbar und insbesondere auch die Aufrechterhaltung des durch die Schwenkbewegung hergestellten gekoppelten bzw. entkoppelten Zustands des Mitnehmers (27) gewährleistet ist.

16. Vorrichtung nach Anspruch 15,
**dadurch gekennzeichnet,**
**dass** die Steuereinrichtung eine Drehfeder (35) umfasst, die auf dem Mitnehmer (27) um eine zu dessen Schwenkachse (29) parallel versetzte Achse drehbar gelagert ist und mit ihren Schenkeln (35a, 35b) zwischen einen den Mitnehmer (27) schwenkbar haltenden Träger (39) und eine gehäusefeste Verzahnung oder Zahnstruktur (41) gespannt ist.

17. Vorrichtung nach Anspruch 16,
**dadurch gekennzeichnet,**
**dass** mittels der Drehfeder (35) der Mitnehmer (27) in eine Entkoppelungsstellung vorgespannt ist.

18. Vorrichtung nach einem der Ansprüche 13 bis 17,
**dadurch gekennzeichnet,**
**dass** der Mitnehmer (27) einen axial vorstehenden Steuervorsprung (43) aufweist, über den der im Aufwickelmodus rotierende Mitnehmer (27) durch eine gehäusefeste Verzahnung oder Zahnstruktur (41) in eine Koppelungsstellung schwenkbar ist.

19. Vorrichtung nach Anspruch 18,
**dadurch gekennzeichnet,**
**dass** die gehäusefeste Verzahnung oder Zahnstruktur (41) durch den zuvor in Koppelungsstellung geschwenkten rotierenden Mitnehmer (27) überwindbar und insbesondere elastisch auslenkbar und/oder verformbar ist.
